# EUROPEAN PATENT APPLICATION

(11) **EP 2 479 665 A1**
(43) Date of publication of application: **25.07.2012**
(21) Application number: 11182790.3
(22) Date of filing: 26.09.2011
(51) Int. Cl.: G06F 9/445

(54) **Electronic device and method for updating software thereof**

(30) Priority: 15.03.2011 KR 20110023050; 04.01.2011 US 429641 P
(71) Applicant: Samsung Electronics Co., Ltd., Suwon-si, Gyeonggi-do 442-742 (KR)
(72) Inventor: Jung, Do-sung, Gyeonggi-do (KR); Kang, Yong-jin, Gyeonggi-do (KR); Seo, Je-Hwan, Daegu (KR); Hwang, Tae-don, Gyeonggi-do (KR)
(74) Representative: Davies, Robert Ean

(57) **Abstract**

Disclosed are an electronic device and a method for updating software thereof. The electronic device includes: a communication unit which includes predetermined software needed for communicating with an exterior; a first storage which stores user information set up in the electronic device; a user input unit; and a controller which updates the software with an update file needed for updating the software and sets up the stored user information again in the communication unit if receiving update instruction for the software through the user input unit.

## Description

### Field

Apparatuses and methods consistent with the exemplary embodiments relate to an electronic device and a method for updating software thereof.

### Description of the Related Art

In an electronic device having a communication unit with predetermined software needed for communicating with an external electronic device, if there is a need for updating the software, a related art electronic device has to be disassembled to update the software and it is thus inconvenient for a user.

Also, if the software is updated under the condition that pairing with the external device has already been established, information about the pairing is deleted and therefore the related art electronic device is inconvenient for a user since s/he has to try to establish the paring with the external device again.

### SUMMARY

Accordingly, one or more exemplary embodiments provide an electronic device and a method for updating software thereof, in which there is no need of disassembling the electronic device when updating software involved in a communication unit.

Another exemplary embodiment is an electronic device and a method for updating software thereof, in which previously established pairing with an external electronic device is maintained and a user does not have to try to establish the paring with the external device again after software involved in a communication unit is completely updated.

The foregoing and/or other aspects may be achieved by providing an electronic device including: a communication unit having software needed for communicating with at least an external device; a first storage which stores user information related to the external device set up in the electronic device; a user input unit; and a controller which updates the software with an update file needed for updating the software and sets up the stored user information again in the communication unit after receiving update instruction for the software through the user input unit.

The communication unit may include a radio frequency (RF) communication module.

The controller may control the first storage to store user information set up in the electronic device when the update instruction is input.

The user information may include identification information of an external electronic device previously paired with the electronic device for the RF communication.

The electronic device may further include an external connector to which the external device storing an update file needed for updating the software is connected, wherein the controller updates the software with the update file received from the external device.

The electronic device may further include a second storage, wherein the controller controls the second storage to store the update file received from the external device.

The controller may control the communication unit to receive the update file needed for updating the software from a second external device.

Another aspect may be achieved by providing a method of updating software of an electronic device, the method including: receiving update instruction through a user input unit with regard to software involved in a communication unit and needed for communicating with at least an external device; storing a first storage with user information related to the external device set up in the electronic device; updating the software with an update file needed for updating the software; and setting up the stored user information again in the communication unit.

The communication unit may include a radio frequency (RF) communication module.

The storing may include storing user information set up in the electronic device at a point of time when the update instruction is input.

The user information may include identification information of the external electronic device previously paired with the electronic device for the RF communication.

The method may further include receiving an update file needed for updating the software stored in the external device connected to an external connector.

The method may further include storing the update file received from the external device in a second storage.

The method may further include receiving the update file needed for updating the software from a second external device through the communication unit.

According to the present invention there is provided an apparatus and method as set forth in the appended claims. Other features of the invention will be apparent from the dependent claims, and the description which follows.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is a schematic view of an electronic device system according to an exemplary embodiment;
FIG. 2 is a schematic view of an electronic device system according to another exemplary embodiment;
FIG. 3 is a control block diagram of an electronic device according to an exemplary embodiment; and
FIG. 4 is a flowchart showing a method of updating software of an electronic device according to an exemplary embodiment.

### DETAILED DESCRIPTION

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

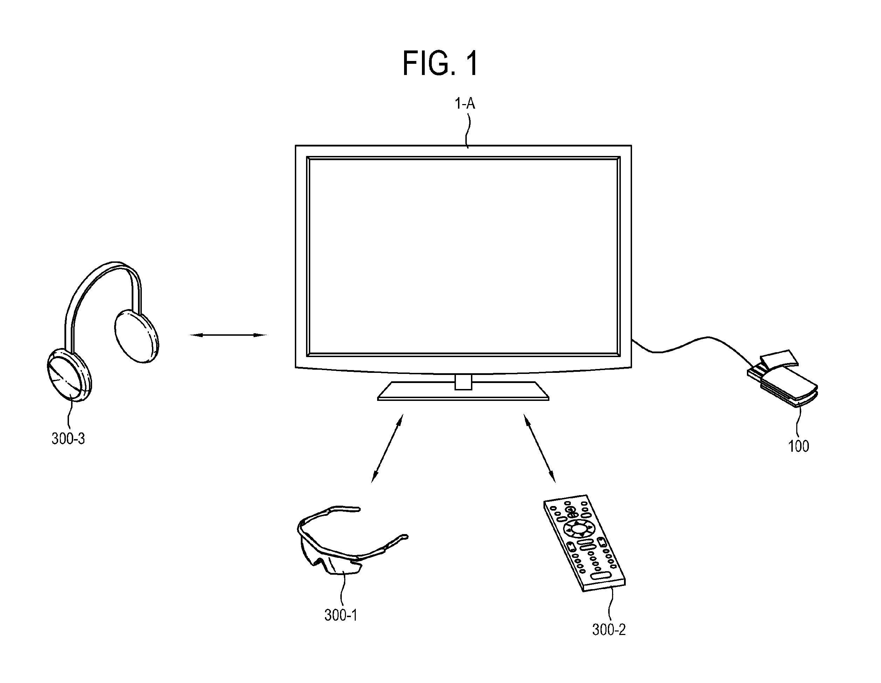

FIG. 1 is a schematic view of an electronic device system according to an exemplary embodiment.

An electronic device according to an exemplary embodiment, includes a communication unit with software needed for communicating with the exterior, includes any type of electronic device that particularly includes a radio frequency (RF) communication module for RF communication. The RF communication module may include a Bluetooth communication module or a Zigbee communication module by way of example. In this exemplary embodiment, a display device (e.g., digital television (DTV), internet protocol television (IPTV), 3-dimensional television (3DTV), or the like TV; a smart phone, a portable multimedia player (PMP), a pocket personal computer (PC), or the like personal digital assistant (PDA); a tablet PC, a Netbook, or the like PC) including the Bluetooth or Zigbee communication module, and shutter glasses used for a 3D display device will be described for example.

As shown in FIG. 1, an electronic device (e.g., 3D TV) 1-A in this exemplary embodiment includes the RF communication module as a communication unit, and the RF communication module involves software (e.g., firmware) needed for communication with third external electronic devices 300-1, 300-2 and 300-3. Likewise, the third external electronic device may include any type of electronic device that includes the RF communication module capable of communicating with the electronic device 1-A. For example, the third external electronic device may include shutter glasses 300-1, a remote controller 300-2, a wireless headset 300-3, etc.

The communication unit of the electronic device 1-A and the communication units of the third external electronic devices 300-1, 300-2 and 300-3 has already been paired through a well-known pairing process for the RF communication. In this state, if there is a need of updating the predetermined software involved in the communication unit of the electronic device 1-A, the electronic device 1-A can update the software without being physically disassembled. Further, there is no effect on the previously established pairing between the electronic device 1-A and the third external electronic devices 300-1, 300-2 and 300-3 even after updating the software.

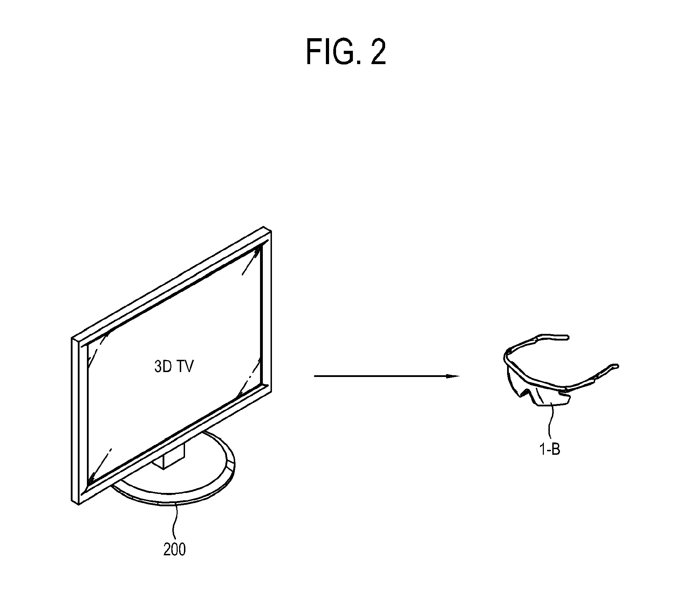

At this time, an update file needed for updating the software may be received from a first external device 100 connected to an external connector of the electronic device 1-A. Another exemplary embodiment will be shown in FIG. 2.

FIG. 2 illustrates that an electronic device (e.g., shutter glasses) 1-B according to another exemplary embodiment receives an update file needed for updating the software from a second external device 200 through the RF communication module. In FIG. 2, the 3D TV is shown as the second external device 200 by way of example, but not limited thereto. Alternatively, the second external device 200 may include any type of electronic device having the RF communication module capable of communicating with the shutter glasses 1-B and storing an update file needed for updating the software.

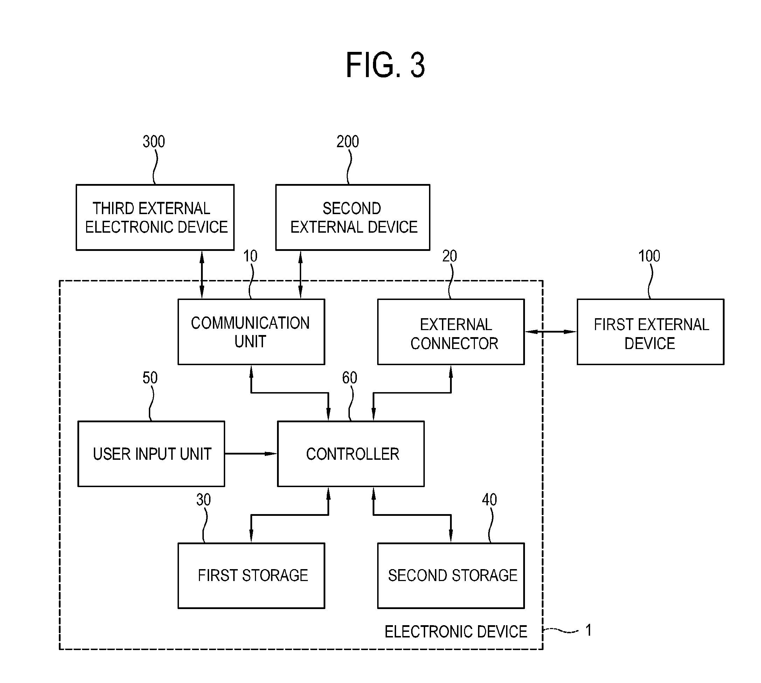

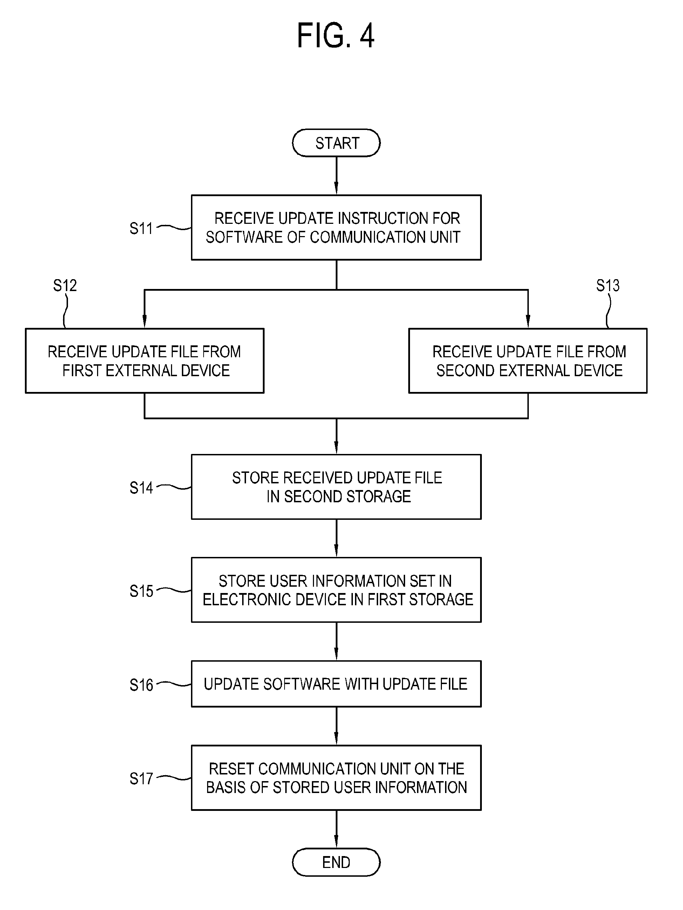

Below, an electronic device according to an exemplary embodiment and a method of updating software thereof will be described in detail with reference to FIGs. 3 and 4.

FIG. 3 is a control block diagram of an electronic device according to an exemplary embodiment.

An electronic device 1 according to this exemplary embodiment includes a communication unit 10, an external connector 20, a first storage 30, a second storage 40, a user input unit 50 and a controller 60 controlling them.

The communication unit 10 involves software needed for communication with the third external electronic device 300. For example, the communication unit 10 may be achieved by an RF communication module for RF communication, and the RF communication module may include a Bluetooth communication module or a Zigbee communication module. The third external electronic device 300 also includes the RF communication module so that the communication unit 10 can communicate via RF with the external electronic device 300. To this end, the pairing is first established by a related art known pairing process, and then the communication is performed.

Thesoftware includes software involved in the Bluetooth communication module or the Zigbee communication module, and for example includes firmware. The software needs to be modified or updated due to an error, a bug, etc. A related art electronic device is so inconvenient since the software involved in the communication unit can be updated only after the communication unit is separated by disassembling the electronic device. Also, it is not desirable since this can be misunderstood as a defective by a consumer. Further, the related art electronic device is inconvenient since it is initialized along with the software update of the communication unit and the pairing with the external electronic device has to be established again after the software update is completed. Accordingly, the electronic device 1 in this exemplary embodiment has been proposed to solve the foregoing problems.

According to another exemplary embodiment, the communication unit 10 may receive a update file for the software by communicating with the second external device 200. The second external device 200 also includes the RF communication module, so that the communication unit 10 and the second external device 200 can perform the RF communication. To this end, the pairing is first established by a related art well-known pairing process, and then the communication is performed. In this exemplary embodiment, the update file for the software is received from the second external device 200, and thus the configuration of the external connector 20 may not be provided.

The external connector 20 is an interface to which the first external device 100 storing the update file needed for updating the software involved in the communication unit 10 is connected, and includes a universal serial bus (USB) interface or a network interface as shown in FIG. 1. The update includes an update for modifying an error, a bug, etc. of the software, or an update for updating the software with the latest version. The update file includes a software update code or a software update image.

The first storage 30 stores user information set up in the electronic device 1. For example, the user information set up in the electronic device 1 is stored at a point of time when update instruction for the software is input through the user input unit 50, and the user information contains identification information about the third external electronic device 300 previously paired with the electronic device 1 for the RF communication. The identification information about the third external electronic device 300 includes medium access control (MAC) address or Bluetooth device (BD) address of the external electronic device 300 paired with the electronic device 1. After the software update is completed under control of the controller 60, the identification information about the third external electronic device 300 stored in the first storage 30 is set up again in the communication unit 10. Thus, it is convenient for a user since there is no need of establishing pairing with the third electronic device 300 even after the software is updated.

The second storage 40 may store an update file needed for updating the software received from the first external device 100 through the external connector 20. From a mechanical point of view, the second storage 40 may be provided in a main board configured to perform a desired function of the electronic device 1.

The user input unit 50 is a user interface to receive a user's selection, and receives a user's selection related to a function or operation of the electronic device 1. The user input unit 50 may be provided with at least one key button as a hot key, and may be achieved by a control panel provided in the electronic device 1. The user input unit 50 may be configured with a plurality of physical function keys, for example, a power on/off key, a menu key, arrow keys, volume keys, letter keys, numeral keys, or the like minimum buttons.

If the update instruction for the software is input through the user input unit 50, the controller 60 updates the software with the update file needed for updating the software, and controls the stored user information to be set up again in the communication unit.

If receiving a predetermined hot key of the user input unit 50, the controller 60 recognizes it as the update instruction for the software. The controller 60 receives the update file for the software from the first external device 100 connected to the external connector 20 and stores it in the second storage 40. Also, the controller 60 transmits the update instruction for the software to the communication unit 10.

The controller 60 controls the user information previously set up in the electronic device 1 to be stored in the first storage unit 30. That is, the MAC address or BD address of the third external electronic device 300 paired with the communication unit 10 of the electronic device 1 is stored as the user information in the first storage 30.

If the user information is completely stored, the controller 60 updates the software of the communication unit 10 with the update file stored in the second storage 40.

If the software update is completed, the controller 60 controls the user information stored in the first storage 30 to be set up in the communication unit 10. Thus, the MAC address or BD address of the external electronic device 300 previously paired with the electronic device 1 is automatically set up in the communication unit 10, so that the pairing between the third electronic device 300 and the electronic device 1 can be automatically established. Accordingly, it is more convenient for a user because there is no need of separately establishing the paring with the third external electronic device 300 again after updating the software of the communication unit 10.

FIG. 4 is a flowchart showing a method of updating software of an electronic device according to an exemplary embodiment.

Referring to FIG. 4, update instruction for the software of the communication 10 is received from a user (S11). In this case, a predetermined hot key input of the user input unit 50 may be recognized as the update instruction for the software.

According to an exemplary embodiment, the software update file is received from the first external device 100 (S12). Referring back to FIG. 1, the electronic device 1 may be a display device (e.g., 3D TV) 1-A, and the external connector 20 may be achieved by a USB interface. The first external device 100 may be an external storage medium including the USB interface. Under control of the controller 60, the update file for the software may be received from the first external device 100 through the external connector 20.

Under control of the controller 60, the update file for the software received from the first external device 100 is stored in the second storage 40 (S14).

The controller 60 controls the user information set up in the electronic device 1 to be stored in the first storage 30 (S15). The user information set up in the electronic device 1 at a point of time when receiving the update instruction from a user in the operation S11 is stored in the first storage 30. The user information contains the MAC address or BD address of the third external electronic device 300 previously paired with the electronic device 1. Referring back to FIG. 1, if the display device (e.g., 3D TV) 1-A has already been paired with the third external electronic devices 300-1, 300-2 and 300-3, the controller 60 stores the MAC address or BD address of the shutter glasses 300-1, the remote controller 300-2 and the wireless headset 300-3 in the first storage 30.

The controller 60 updates the software of the communication unit 10 with the update file for the software stored in the second storage 40 (S16). The controller 60 transmits the update instruction received from a user to the communication unit 10, and performs the update with the stored software update file.

If the update is completed in the operation S16, the controller 60 sets up the user information stored in the first storage 30 again in the communication unit 10 (S17). Referring back to FIG. 1, the controller 60 sets up the MAC address or BD address of the shutter glasses 300-1, the remote controller 300-2 and the wireless headset 300-3 stored in the operation S15 in the communication unit 10, so that the pairing between the display device 1-A and the shutter glasses 300-1, the remote controller 300-2 and the wireless headset 300-3 can be automatically set up again. Thus, it is convenient for a user since there is no need of setting up the existing pairing with the third external electronic device again even though the software of the communication unit 10 is updated.

According to another exemplary embodiment, a method of updating software in the case where the electronic device 1 is the shutter glasses 1-B will be described with reference to FIG. 2.

As shown in FIG. 2, the shutter glasses 1-B can communicate with the second external device (e.g. 3D TV) 200. For example, the RF communication may be possible between the shutter glasses 1-B and the second external device 200.

In the operation S11, a predetermined hot key of the user input unit 50 provided in the shutter glasses 1-B may be input and recognized as the update instruction for the software of the communication unit 10. Also, the update instruction for the software may be received from the second external device 200 through the communication unit 10. In the operation S13, the update file for the software is received from the second external device 200 (S13). The received update file is stored in the second storage (S14), and the user information set up in the shutter glasses 1-B is stored in the first storage (S15). In this exemplary embodiment, the second external device (e.g., 3D TV) 200 may serve as the external electronic device 300 previously paired with the shutter glasses 1-B. Accordingly, the shutter glasses 1-B stores the MAC address or BD address of the third external electronic device 300. Under control of the controller 60, the MAC address or BD address of the third external electronic device 300 stored in the first storage 30 is set up again in the communication unit 10 after updating the software with the update file, so that the pairing with the third electronic device 300 can be automatically established again.

As apparent from the foregoing description, there are provided an electronic device and a method for updating software thereof, in which there is no need of disassembling the electronic device when updating software involved in a communication unit.

Also, there are provided an electronic device and a method for updating software thereof, in which previously established pairing with an external electronic device is maintained and a user does not have to try to establish the paring with the external device again after software involved in a communication unit is completely updated.

Although a few exemplary embodiments have been shown and described, it will be appreciated by those skilled in the art that changes may be made in these exemplary embodiments without departing from the principles and spirit of the invention, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An electronic device comprising:
a communication unit having software that communicates with at least an external device ;
a first storage which stores user information related to the external device set up in the electronic device;
a user input unit; and
a controller which updates the software with an update file needed for updating the software and sets up the stored user information again in the communication unit after receiving update instruction for the software through the user input unit.

2. The electronic device according to claim 1, wherein the communication unit comprises a radio frequency (RF) communication module.

3. The electronic device according to claim 1 or 2, wherein the controller controls the first storage to store the user information when the update instruction is input.

4. The electronic device according to any preceding claim, wherein the user information comprises identification information of the external electronic device previously paired with the electronic device for the RF communication.

5. The electronic device according to any preceding claim, further comprising an external connector to which the external device storing an update file needed for updating the software is connected,
wherein the controller updates the software with the update file received from the external device.

6. The electronic device according to any preceding claim, further comprising a second storage,
wherein the controller controls the second storage to store the update file received from the external device.

7. The electronic device according to any preceding claim, wherein the controller controls the communication unit to receive the update file needed for updating the software from a second external device.

8. A method of updating software of an electronic device, the method comprising:
receiving update instruction through a user input unit with regard to software involved in a communication unit and needed for communicating with at least an external device;
storing a first storage with user information related to the external device set up in the electronic device;
updating the software with an update file needed for updating the software; and
setting up the stored user information again in the communication unit.

9. The method according to claim 8, wherein the communication unit comprises a radio frequency (RF) communication module.

10. The electronic device according to claim 8 or 9, wherein the storing comprises storing the user information when the update instruction is input.

11. The method according to any preceding claim, wherein the user information comprises identification information of the external electronic device previously paired with the electronic device for the RF communication.

12. The method according to any preceding claim, further comprising receiving an update file needed for updating the software stored in the external device connected to an external connector.

13. The method according to any preceding claim, further comprising storing the update file received from the external device in a second storage.

14. The method according to any preceding claim, further comprising receiving the update file needed for updating the software from a second external device through the communication unit.
